# EUROPÄISCHE PATENTSCHRIFT

(11) **EP 1 517 528 B1**
(45) Veröffentlichungstag und Bekanntmachung des Hinweises auf die Patenterteilung: **12.08.2009**
(21) Anmeldenummer: 03020994.4
(22) Anmeldetag: 17.09.2003
(51) Int. Cl.: H04M 3/523

(54) **Anrufverteilung zwischen Anrufzentralen**
Call distribution between call centers
Distribution d'appels entre des centres d'appel

(43) Veröffentlichungstag der Anmeldung: 23.03.2005
(73) Patentinhaber: Nokia Siemens Networks GmbH & Co. KG, 81541 München (DE)
(72) Erfinder: Haberer, Norbert, Dr., 12487 Berlin (DE); Unger, Stefan, 82008 Unterhaching (DE)

(56) Entgegenhaltungen:
- EP-A- 0 559 979
- EP-A- 1 122 937
- DE-A- 10 025 436
- US-A1- 2003 002 654

## Beschreibung

Die Erfindung betrifft ein Verfahren zur Anrufverteilung in einer Auskunftsstelle mit mehreren Auskunftsplätzen, bei dem die Steuerung auf eine Vermittlungseinheit und auf einen Zentralrechner aufgeteilt wird, wobei zwischen Zentralrechner und Vermittlungseinheit Daten ausgetauscht werden, welche für die Wegesteuerung und die Überwachung relevant sind. Weiterhin betrifft die Erfindung eine Anordnung sowie einen Anrufverteilrechner zur Durchführung des erfindungsgemäßen Verfahrens.

Betreiber einer Auskunftsstelle, eines sogenannten "Call Centers", sind in aller Regel bemüht, die Auskunftsplätze der Auskunftsstelle optimal auszulasten. Das heißt, eine Auskunftsperson oder ein "Call Center Agent" soll möglicht viele Anfragen pro Zeiteinheit bearbeiten. In der Praxis bedeutet dies, dass die Wartezeit zwischen zwei Anrufen gegen Null konvergiert. Dies wird etwa durch eine Anrufverteilfunktion, welche auch unter dem Begriff "Automatic Call Distribution", kurz ACD, bekannt ist, bewerkstelligt.

Dies gilt auch für im Fall von größeren Auskunftsstellen, welche gewöhnlich über ein Land oder auch über Ländergrenzen hinweg verteilt sind. Dazu ist eine übergeordnete Funktion erforderlich, die eine Anrufverteilung über mehrere Standorte hinweg steuert. Dabei sollen Kriterien wie Wissen und Fähigkeiten einer Auskunftsperson, die sogenannten "skills", statische Verteilkriterien sowie dynamische Verteilkriterien berücksichtigt werden. Beispiele für statische Kriterien wären eine Lastverteilung zwischen zwei Standorten von 30% zu 70% oder die Umleitung zu einem dritten Standort zu einer bestimmten Uhrzeit, etwa von 18:00 bis 6:00. Ein Beispiel für ein dynamisches Kriterium ist etwa die Anzahl der Anrufe in einer Warteschlange eines Auskunftsstellenstandortes.

Nach dem Stand der Technik können ankommende Rufe durch eine geeignete Netztopologie auf die verschiedenen Standorte verteilt werden, das heißt die Standorte haben einen geographisch begrenzten Einzugsbereich. Möglich ist auch die Zuweisung einer zentralen Rufnummer ohne geographischen Bezug. Dabei erfolgt die Wegsteuerung, das sogenannte "Routing", etwa über ein intelligentes Netz. In diesem Fall können lediglich statische Kriterien berücksichtigt werden. Eine Erweiterung auf dynamische Kriterien wäre technisch sehr aufwändig und ist daher noch nicht erfolgt.

Aus dem Stand der Technik ist auch ein weiteres Verfahren zur Anrufverteilung bekannt. Dabei wird einer der Auskunftsstellenstandorte als primäre Adresse eingerichtet. Alle ankommenden Anrufe gelangen daher vorerst zu diesem Standort und werden von dort gegebenenfalls zu anderen Standorten weitervermittelt. Dieses Verfahren ist ebenfalls für statische Verteilkriterien anwendbar, für dynamische dagegen nicht.

EP 0 559 979 A2 beschreibt ein System zur Verarbeitung subscriber-spezifischer Anrufweiterleitung, welche außerhalb des Telekommunikationsnetzes eines Betreibers durchgeführt wird. Dabei wird zuerst durch einen SCP anhand eines sogenannten Routing-Baums festgelegt, an welches Ziel ein Anruf weiterzuleiten ist. Vor der Weiterleitung wird vom SCP eine Anfrage an einen sogenannten AIN-Prozessor im Netz des Subscribers gesendet. Dieser AIN-Prozessor liefert an den SCP einen Ressourcen-Identifier zurück, welcher anhand verschiedener Informationen vom AIN-Prozessor bestimmt wird.

Der Erfindung liegt also die Aufgabe zugrunde, ein Verfahren zur Anrufverteilung in einer Auskunftsstelle anzugeben, welches die Anwendung dynamischer Verteilkriterien ermöglicht.

Dies geschieht erfindungsgemäß mit einem Verfahren der eingangs genannten Art, bei dem die Daten, welche zwischen Zentralrechner und Vermittlungseinheit ausgetauscht werden, über einen Anrufverteilrechner geführt werden, welcher zwischen Vermittlungseinheit und Zentralrechner eingefügt wird.

Gemäß der Erfindung erfolgt bei dem Verfahren die Verteilung der Anrufe aufgrund von statischen Kriterien oder dynamischen Kriterien, welche von einer Auskunftsperson unabhängig sind, im Anrufverteilrechner. Weiterhin erfindungsgemäß wird eine Anfrage für eine Verteilung der Anrufe nach dynamischen Kriterien, welche von einer Auskunftsperson abhängig sind, vom Anrufverteilrechner an den Zentralrechner weitergegeben.

Die Erfindung erlaubt eine klare Trennung zwischen Funktionen und Daten, die im Bereich des Betreibers der Auskunftsstelle liegen, sowie Daten, die auch im Bereich eines Betreibers eines Telekommunikationsnetzes liegen können. Funktionen und Daten im Bereich des Auskunftsstellenbetreibers sind beispielsweise die eigentliche Rufsteuerung innerhalb der Auskunftsstelle, welche etwa die Auswahl eines Auskunftsplatzes und die Steuerung diverser Ansagen umfasst, sowie Informationen über die Fähigkeiten der Auskunftspersonen, Verwaltung kundenspezifischer Daten und Unterstützung von Hilfsprogrammen. Für die Steuerung dieser Funktionen ist der Zentralrechner zuständig. Funktionen und Daten im Bereich des Netzbetreibers sind beispielsweise die Administration der Wegsteuerung innerhalb des Telekommunikationsnetzes, damit die Auskunftsstelle erreicht werden kann, sowie die Verteilung nach statischen und von einer Auskunftsperson unabhängigen Kriterien im Anrufverteilrechner.

Neben der Anwendbarkeit dynamischer Verteilkriterien bleibt hier auch die bekannte Aufteilung der Steuerung einer Auskunftsstelle auf Vermittlungseinheit und Zentralrechner auf vorteilhafte Weise erhalten, so dass eine Umsetzung des erfindungsgemäßen Verfahrens auf einfache Weise möglich ist. Das erfindungsgemäße Verfahren eignet sich dabei gleichermaßen sowohl für öffentliche Netze als auch private Netze.

Günstig ist es dabei, wenn die Daten mehrerer Vermittlungseinheiten zu einem Anrufverteilrechner geführt werden. Neben den genannten Vorteilen ist hierbei auch die Bündelung von Daten, welche für die Wegesteuerung und die Überwachung relevant sind, der sogenannten "Routing & Monitoring"-Daten, über mehrere Auskunftsstellenstandorte hinweg möglich.

Vorteilhaft ist es auch, wenn die initiale Ansteuerung des Anrufverteilrechners über eine dem Anrufer nächstgelegene Vermittlungseinheit erfolgt, weil das Telekommunikationsnetz dabei nur vergleichsweise gering belastet wird. Die genannte Vermittlungseinheit enthält dabei beispielsweise nur eine vereinfachte Anrufverteilungsfunktion, welche lediglich zur Wiedergabe einer Ansage geeignet ist. Während dieser Ansage wird im Anrufverteilrechner entschieden, zu welchem Standort der ankommende Anruf weitergeleitet werden soll.

Ein weitere günstige Variante ist auch mit einem Verfahren gegeben, bei dem zwischen Zentralrechner und einem Auskunftsplatz Daten ausgetauscht werden, welche für die verbindungssteuerung relevant sind. Die Verbindungssteuerung bleibt dabei in bekannter Weise dem Zentralrechner vorbehalten, weswegen die Umsetzung der Erfindung auf einfache Weise möglich ist.

Günstig ist es, wenn die Entscheidung ob von einer Auskunftsperson abhängige Kriterien oder von einer Auskunftsperson unabhängige Kriterien anzuwenden sind, anhand der vom Anrufer gewählten Rufnummer erfolgt. Dies ist eine besonders einfach umzusetzende und damit vorteilhafte Möglichkeit für die Anwendung des erfindungsgemäßen Verfahrens.

Eine besonders vorteilhafte Ausgestaltung der Erfindung ist auch mit einem Verfahren gegeben, bei dem die Kommunikation zwischen dem Anrufverteilrechner, dem Zentralrechner und der Vermittlungseinheit oder den Vermittlungseinheiten nach dem Standard für Computer Supported Telecommunications Applications, kurz CSTA, erfolgt. Dieses ist in der Schrift ECMA-285, June 2000, "Protocol for Computer Supported Telecommunikations Applications (CSTA) Phase III 2nd edition" veröffentlicht und unter der Internetadresse "http://www.ecma-international.org" zu beziehen. Eine Umsetzung des erfindungsgemäßen Verfahrens ist hierbei auf besonders einfache Weise möglich, da ein Anrufverteilrechner in eine bestehende Auskunftsstellenstruktur ohne Änderung der darin enthaltenen Komponenten eingefügt werden kann. Andere denkbare Möglichkeiten sind auch das Telephony Application Programming Interface, kurz TAPI, der Firma Microsoft oder das Java Telephony Application Programming Interface, kurz JTAPI, welches auf der Programmiersprache JAVA basiert.

Die Aufgabe der Erfindung wird darüber hinaus durch einen Anrufverteilrechner gelöst, welcher Mittel zum Austausch von Daten, welche für die Wegesteuerung und die Überwachung relevant sind, von und zu einer Vermittlungseinheit sowie von und zu einem Zentralrechner umfasst.

Auch hier bleibt die Aufteilung der Steuerung einer Auskunftsstelle vorteilhaft erhalten. Je nach Ausführung des Anrufverteilrechners, kann dieser sogar ohne Änderung der Vermittlungseinheit und des Zentralrechners in eine bestehende Struktur eingefügt werden, beispielsweise wenn die Kommunikationsmittel für die Anwendung des CSTA-Protokolls geeignet sind.

Gemäß der Erfindung umfasst der Anrufverteilrechner:
- Mittel zur Verteilung der Anrufe aufgrund von statischen Kriterien oder dynamischen, von einer Auskunftsperson unabhängigen, Kriterien, und
- Mittel zur Weitergabe einer Anfrage für eine Verteilung der Anrufe nach dynamischen, von einer Auskunftsperson abhängigen, Kriterien an einen Zentralrechner.

Wie bereits erwähnt, erlaubt die Erfindung eine klare Trennung zwischen Funktionen und Daten, die im Bereich des Betreibers der Auskunftsstelle liegen, sowie Daten, die auch im Bereich eines Betreibers eines Telekommunikationsnetzes liegen können.

Die Aufgabe der Erfindung wird auch mit einer Anordnung zur Anrufverteilung in einer Auskunftsstelle, umfassend eine Vermittlungseinheit, einen damit verbundenen Zentralrechner sowie einen oder mehrere Auskunftsplätze, gelöst, bei der zwischen Vermittlungseinheit und Zentralrechner ein Anrufverteilrechner nach dem vorhergehenden Aspekt der Erfindung angeordnet ist.

Die bekannte Aufteilung der Steuerung einer Auskunftsstelle auf Vermittlungseinheit und Zentralrechner bleibt hier auf vorteilhafte Weise erhalten, so dass eine Umsetzung des erfindungsgemäßen Verfahrens auf einfache Weise möglich ist.

Es wird an dieser Stelle auch angemerkt, dass die für das erfindungsgemäße Verfahren genannten Vorteile gleichermaßen auch für die erfindungsgemäße Anordnung, sowie den erfindungsgemäßen Anrufverteilrechner gelten.

Die Erfindung wird nun anhand eines in den Figuren dargestellten Ausführungsbeispiels näher erläutert, welches die Anfrage eines Anrufers bei einer erfindungsgemäßen Auskunftsstelle betrifft.

Es zeigen:
Figur 1: Struktur der erfindungsgemäßen Auskunftsstelle;
Figur 2: Bearbeitung eines Rufs im Anrufverteilrechner ACDS;
Figur 3: Bearbeitung eines Rufs im Zentralrechner CC;

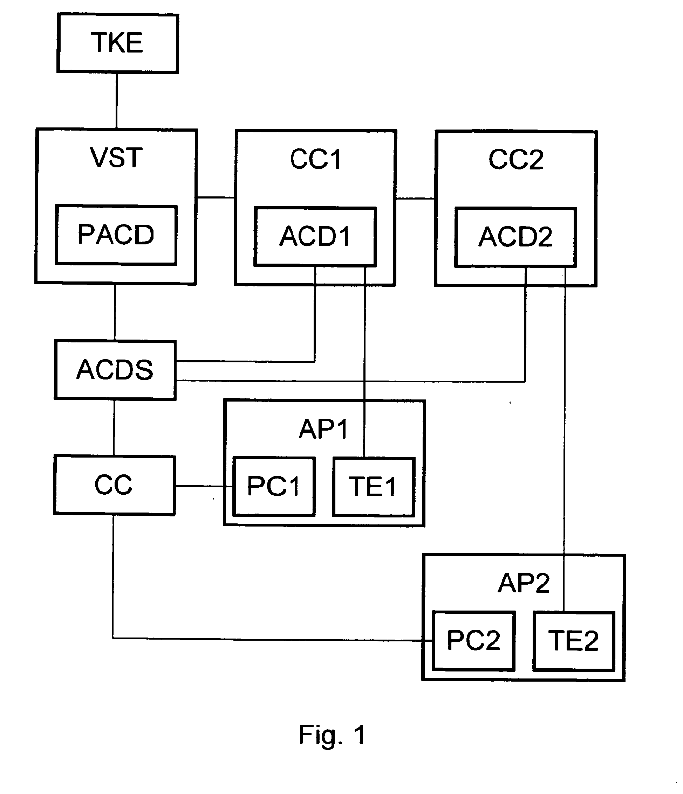

Die in der Figur 1 dargestellte Anordnung umfasst ein einem Anrufer zugeordnetes Telekommunikationsendgerät TKE, eine Vermittlungsstelle VST mit einer integrierten, vereinfachten Vermittlungseinheit PACD, einen ersten und einen zweiten Standort einer Auskunftsstelle CC1 und CC2 mit je einer integrierten Vermittlungseinheit ACD1 und ACD2, einen ersten Arbeitsplatz AP1 mit einem ersten Computer PC1 und einem ersten Telefon TE1, einen zweiten Arbeitsplatz AP2 mit einem zweiten Computer PC2 und einem zweiten Telefon TE2, und schließlich einen Anrufverteilrechner ACDS sowie einen Zentralrechner CC.

Das Telekommunikationsendgerät TKE ist dabei mit der Vermittlungsstelle VST verbunden. Diese, sowie der erste und der zweite Standort der Auskunftsstelle CC1 und CC2, genauer die erste und zweite Vermittlungseinheit ACD1 und ACD2, sind mit dem Anrufverteilrechner ACDS verbunden. Weiterhin ist an den Anrufverteilrechner ACDS auch der Zentralrechner CC angeschlossen, welcher Verbindungen zum ersten und zweiten Computer PC1 und PC2 umfasst. Des weiteren ist das erste Telefon TE1 an die erste Vermittlungseinheit ACD1 angeschlossen, das zweite Telefon TE2 an die zweite Vermittlungseinheit ACD2. Schließlich sind die Vermittlungsstelle VST, der erste Standort der Auskunftsstelle CC1 und der zweite Standort CC2 auch untereinander verbunden. Dies ist hier vereinfacht durch eine kettenförmige Verschaltung dargestellt. In der Praxis werden diese Komponenten jedoch Bestandteil eines komplexen Telekommunikationsnetzes sein.

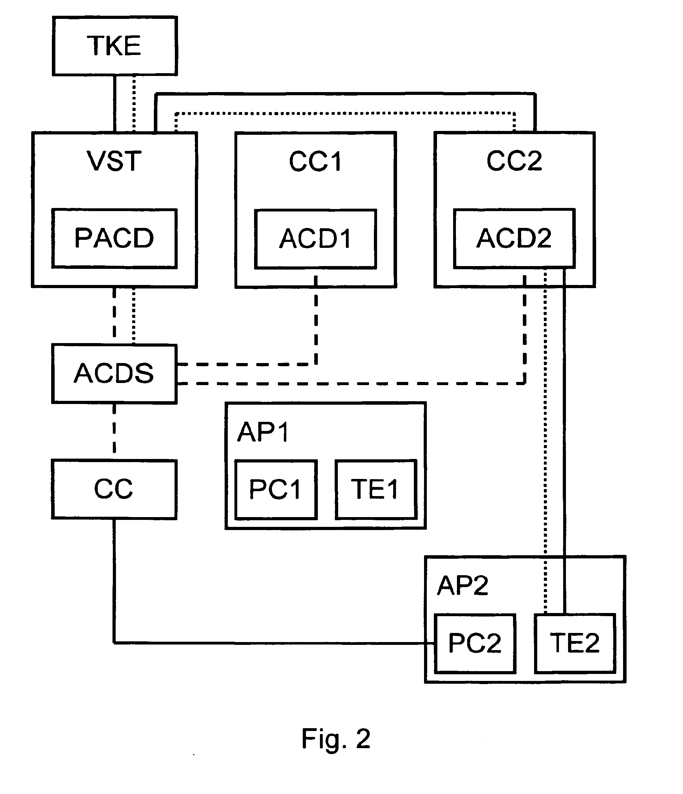

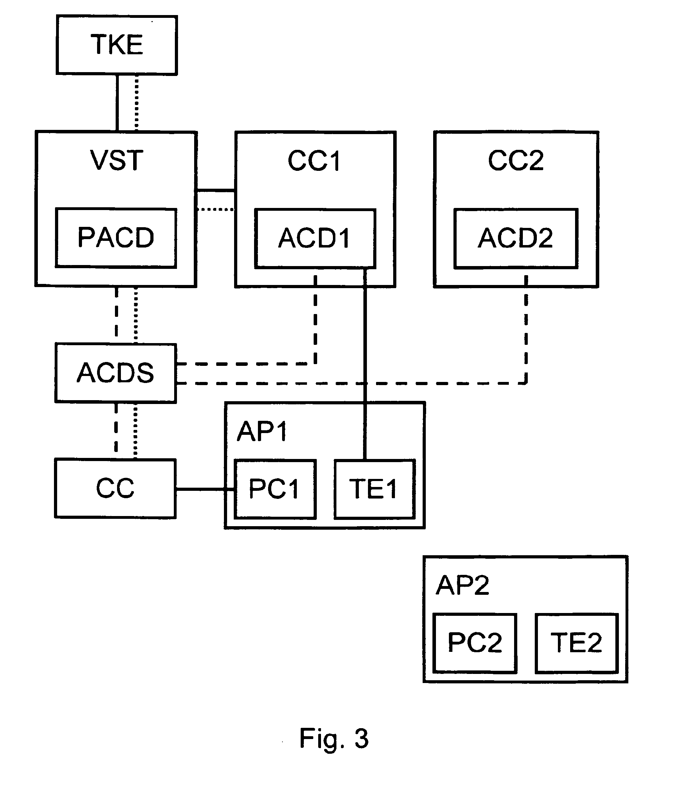

Die Funktion der in Figur 1 dargestellten Anordnung wird nun anhand der Figuren 2 und 3 erläutert. Dabei bedeuten durchgezogene Linien Verbindungen, die für die Verbindungssteuerung relevant sind, strichlierte Linien Verbindungen, die Wegesteuerung und die Überwachung relevant sind, und punktierte Linien Sprachverbindungen.

In der Figur 2 wird von einem Anrufer mit Hilfe des ihm zugeordneten Telekommunikationsendgerätes TKE ein Ruf zu einer Auskunftsstelle initiiert, welcher über die Vermittlungsstelle VST geführt wird. In Folge wird von der vereinfachten Vermittlungseinheit PACD ein Ansagetext zum Telekommunikationsendgerät TKE übermittelt und gleichzeitig eine Anfrage an den Anrufverteilrechner ACDS gestellt, wie der Anruf zu behandeln ist. Im Anrufverteilrechner ACDS sei für die durch den Anrufer gewählte Rufnummer beispielsweise ein Verteilkriterium eingerichtet, demzufolge der Ruf sowohl vom ersten Standort der Auskunftsstelle CC1 als auch vom zweiten Standort CC2 bearbeitet werden kann, abhängig vom Füllstatus der zugeordneten Anruferwarteschlangen. Diese Zustände sind im Anrufverteilrechner ACDS bekannt, da dieser laufend die einzelnen Standorte überwacht. Dies ist durch die strichlierten Linien symbolisiert. Es wird nun angenommen, dass der zweite Standort CC2 den Anruf übernehmen soll. Daher wird die Rufnummer des zweiten Standortes CC2 an die Vermittlungsstelle VST zurückgegeben und der Ruf in Folge an den zweiten Standort CC2 weitergeleitet. Die Sprachverbindung ist dabei mit einer punktierten Linie symbolisiert.

In der Figur 3 wird analog zu Figur 2 von einem Anrufer mit Hilfe des ihm zugeordneten Telekommunikationsendgerätes TKE ein Ruf zu einer Auskunftsstelle initiiert. In Folge wird ebenfalls von der vereinfachten Vermittlungseinheit PACD ein Ansagetext zum Telekommunikationsendgerät TKE übermittelt und gleichzeitig eine Anfrage an den Anrufverteilrechner ACDS gestellt, wie der Anruf zu behandeln ist. Im Anrufverteilrechner ACDS sei für die durch den Anrufer gewählte Rufnummer ein Verteilkriterium eingerichtet, demzufolge die Anrufverteilung vom Zentralrechner CC durchzuführen sei. Deshalb wird die Anfrage vom Anrufverteilrechner ACDS an den Zentralserver CC weitergeleitet. Dieser wählt nun den ersten Standort CC1 aus, da der angeforderte Dienst beispielsweise nur dort bearbeitet werden kann. Vom Zentralrechner CC wird nun in Folge die Rufnummer des ersten Standortes CC1 an den Anrufverteilrechner ACDS zurück übermittelt. Die weitere Wegsteuerung erfolgt wie bereits in Figur 2 gezeigt, das heißt die Rufnummer des ersten Standortes CC1 wird an die Vermittlungsstelle VST zurückgegeben und der Ruf in Folge an den ersten Standort CC1 weitergeleitet. Die Sprachverbindung ist dabei wieder mit einer punktierten Linie symbolisiert.

## Patentansprüche

1. Verfahren zur Anrufverteilung in einer Auskunftsstelle mit mehreren Auskunftsplätzen (AP1, AP2), bei dem die Steuerung auf eine Vermittlungseinheit (ACD1, ACD2) und auf einen Zentralrechner (CC) aufgeteilt wird, wobei zwischen Zentralrechner (CC) und Vermittlungseinheit (ACD1, ACD2) Daten ausgetauscht werden, welche für die Wegesteuerung und die Überwachung relevant sind
und über einen Anrufverteilrechner (ACDS) geführt werden, welcher zwischen Vermittlungseinheit (ACD1, ACD2) und Zentralrechner (CC) eingefügt wird,
**dadurch gekennzeichnet,**
**dass** die Verteilung der Anrufe aufgrund von statischen Kriterien oder dynamischen Kriterien, welche von einer Auskunftsperson unabhängig sind, im
Anrufverteilrechner (ACDS) erfolgt und
**dass** eine Anfrage für eine Verteilung der Anrufe nach dynamischen Kriterien, welche von einer Auskunftsperson abhängig sind, vom Anrufverteilrechner (ACDS) an den Zentralrechner (CC) weitergegeben wird.

2. Verfahren nach Anspruch 1, **dadurch**
**gekennzeichnet, dass** die Daten mehrerer Vermittlungseinheiten (ACD1, ACD2) zu einem Anrufverteilrechner (ACDS) geführt werden.

3. Verfahren nach Anspruch 2, **dadurch**
**gekennzeichnet, dass** die initiale Ansteuerung des Anrufverteilrechners (ACDS) über eine dem Anrufer nächstgelegene Vermittlungseinheit (PACD) erfolgt.

4. Verfahren nach einem der Ansprüche 1 bis 3, **dadurch gekennzeichnet, dass** zwischen Zentralrechner (CC) und
einem Auskunftsplatz (AP1, AP2) Daten ausgetauscht werden, welche für die Verbindungssteuerung relevant sind.

5. Verfahren nach einem der vorhergehenden Ansprüche, **dadurch gekennzeichnet, dass** die Entscheidung, ob von einer Auskunftsperson abhängige Kriterien oder von einer Auskunftsperson unabhängige Kriterien anzuwenden sind, anhand der vom Anrufer gewählten Rufnummer erfolgt.

6. Verfahren nach einem der Ansprüche 1 bis 5, **dadurch gekennzeichnet, dass** die Kommunikation zwischen dem Anrufverteilrechner (ACDS), dem Zentralrechner (CC) und der Vermittlungseinheit oder den Vermittlungseinheiten (ACD1, ACD2) nach dem CSTA-Protokoll erfolgt.

7. Anordnung zur Anrufverteilung in einer Auskunftsstelle, umfassend eine Vermittlungseinheit (ACD1, ACD2), einen damit verbundenen Zentralrechner (CC) sowie einen oder mehrere Auskunftsplätze (AP1, AP2), wobei zwischen Vermittlungseinheit (ACD1, ACD2) und Zentralrechner (CC) ein Anrufverteilrechner (ACDS) angeordnet ist, welcher Anrufverteilrechner (ACDS) mit Mitteln zum Austausch von Daten, welche für die Wegesteuerung und die Überwachung relevant sind, von und zu der Vermittlungseinheit (ACD1, ACD2) sowie von und zu dem Zentralrechner (CC), versehen ist
**dadurch gekennzeichnet,**
- **dass** der Anrufverteilrechner (ACDS) Mittel zur Verteilung der Anrufe aufgrund von statischen Kriterien oder dynamischen, von einer Auskunftsperson unabhängigen, Kriterien umfasst und
- **dass** der Anrufverteilrechner (ACDS) Mittel zur Weitergabe einer Anfrage für eine Verteilung der Anrufe nach dynamischen, von einer Auskunftsperson abhängigen, Kriterien an einen Zentralrechner (CC) umfasst.

## Claims

1. Method for call distribution in any call centre comprising several agent's positions (AP1, AP2), in which the control is distributed to a switching unit (ACD1, ACD2) and to a central computer (CC), wherein data are exchanged between the central computer (CC) and the switching unit (ACD1, ACD2), which data are relevant to the routing and monitoring and are conducted via a call distribution server (ACDS) which is inserted between the switching unit (ACD1, ACD2) and central computer (CC), **characterized in that** the distribution of the calls is carried out on the basis of static criteria or dynamic criteria, which are independent of a call centre agent, in the call distribution server (ACDS) and **in that** an enquiry for a distribution of the calls is transferred from the call distribution server (ACDS) to the central computer (CC) in accordance with dynamic criteria which are dependent on a call centre agent.

2. Method according to Claim 1, **characterized in that** the data of several switching units (ACD1, ACD2) are conducted to a call distribution server (ACDS).

3. Method according to Claim 2, **characterized in that** the initial accessing of the call distribution server (ACDS) is carried out via a switching unit (PACD) closest to the caller.

4. Method according to one of Claims 1 to 3, **characterized in that** between the central computer (CC) and an agent's position (AP1, AP2), data are exchanged which are relevant to the call control.

5. Method according to one of the preceding claims, **characterized in that** the decision as to whether criteria dependent on a call centre agent or criteria independent of a call centre agent are to be applied is made by means of the directory number dialled by the caller.

6. Method according to one of Claims 1 to 5, **characterized in that** the communication between the call distribution server (ACDS), the central computer (CC) and the switching unit or the switching units (ACD1, ACD2) is carried out in accordance with the CSTA protocol.

7. Arrangement for call distribution in a call centre, comprising a switching unit (ACD1, ACD2), a central computer (CC) connected thereto and one or more agent's positions (AP1, AP2), wherein a call distribution server (ACDS) is arranged between the switching unit (ACD1, ACD2) and the central computer (CC), which call distribution server (ACDS) is provided with means for exchanging data which are relevant to routing and monitoring, from and to the switching unit (ACD1, ACD2) and from and to the central computer (CC), **characterized in that**
- the call distribution server (ACDS) comprises means for distributing the calls on the basis of static criteria or dynamic criteria independent of a call centre agent and
- **in that** the call distribution server (ACDS) comprises means for transferring an enquiry for a distribution of the calls to a central computer (CC) in accordance with dynamic criteria dependent on a call centre agent.

## Revendications

1. Procédé de distribution d'appels dans un centre d'appel comprenant plusieurs postes d'appel (AP1, AP2), dans lequel la commande est répartie sur une unité de commutation (ACD1, ACD2) et sur un ordinateur central (CC), entre l'ordinateur central (CC) et l'unité de commutation (ACD1, ACD2) étant échangées des données pertinentes pour le routage et la surveillance
et qui sont véhiculées à travers un ordinateur de distribution d'appels (ACDS) inséré entre l'unité de commutation (ACD1, ACD2) et l'ordinateur central (CC),
**caractérisé en ce que**
la distribution des appels sur la base de critères statiques ou de critères dynamiques, qui sont indépendants d'un opérateur, se fait dans l'ordinateur de distribution d'appels (ACDS), et
une demande pour une distribution des appels selon des critères dynamiques, qui sont dépendants d'un opérateur, est transmise de l'ordinateur de distribution d'appels (ACDS) à l'ordinateur central (CC).

2. Procédé selon la revendication 1, **caractérisé en ce que** les données de plusieurs unités de commutation (ACD1, ACD2) sont acheminées vers un ordinateur de distribution d'appels (ACDS).

3. Procédé selon la revendication 2, **caractérisé en ce que** l'activation initiale de l'ordinateur de distribution d'appels (ACDS) se fait à travers une unité de commutation (PACD) la plus proche de l'appelant.

4. Procédé selon l'une des revendications 1 à 3, **caractérisé en ce que** des données pertinentes pour la commande de connexion sont échangées entre l'ordinateur central (CC) et un poste d'appel (AP1, AP2).

5. Procédé selon l'une des revendications précédentes, **caractérisé en ce que** la décision d'appliquer des critères dépendants d'un opérateur ou des critères indépendants d'un opérateur intervient selon le numéro d'appel composé par l'appelant.

6. Procédé selon l'une des revendications 1 à 5, **caractérisé en ce que** la communication entre l'ordinateur de distribution d'appels (ACDS), l'ordinateur central (CC) et l'unité de commutation ou les unités de commutations (ACD1, ACD2) se fait selon le protocole CSTA.

7. Agencement de distribution d'appels dans un centre d'appel, comprenant une unité de commutation (ACD1, ACD2), un ordinateur central (CC) relié à celle-ci et un ou plusieurs postes d'appel (AP1, AP2), un ordinateur de distribution d'appels (ACDS) étant agencé entre l'unité de commutation (ACD1, ACD2) et l'ordinateur central (CC), lequel ordinateur de distribution d'appels (ACDS) est doté de moyens permettant l'échange de données pertinentes pour le routage et la surveillance, en provenance et à destination de l'unité de commutation (ACD1, ACD2) ainsi qu'en provenance et à destination de l'ordinateur central (CC),
**caractérisé en ce que**
- l'ordinateur de distribution d'appels (ACDS) comprend des moyens permettant la distribution des appels sur la base de critères statiques ou de critères dynamiques, qui sont indépendants d'un opérateur, et
- l'ordinateur de distribution d'appels (ACDS) comprend des moyens permettant la transmission d'une demande pour une distribution des appels selon des critères dynamiques, qui sont dépendants d'un opérateur, à un ordinateur central (CC).
